# EUROPEAN PATENT APPLICATION

(11) **EP 4 474 623 A1**
(43) Date of publication of application: **11.12.2024**
(21) Application number: 24168143.6
(22) Date of filing: 02.04.2024
(51) Int. Cl.: F01D 25/28, B64F 5/50

(54) **SPACER TOOLS FOR AIRCRAFT ENGINE ASSEMBLIES, AIRCRAFT ENGINE ASSEMBLIES WITH SPACER TOOLS, AND RELATED METHODS**

(30) Priority: 05.06.2023 US 202363506218 P; 06.02.2024 US 202418434504
(71) Applicant: The Boeing Company, Arlington, VA 22202 (US)
(72) Inventor: Miller, Annalise C., Arlington, 22202 (US); Mouser, Lance, Arlington, 22202 (US); Howell, Joshua, Arlington, 22202 (US)
(74) Representative: Witte, Weller & Partner Patentanwälte mbB

(57) **Abstract**

Spacer tools for aircraft engine assemblies comprise a body (102) comprising two or more engine-assembly-structure engagement surfaces (104) positioned to respectively engage two or more engine-assembly structures (12). The body is configured to operatively maintain the two or more engine-assembly structures (12) in a predetermined spaced-apart relationship.

## Description

### FIELD

The present disclosure relates to spacer tools for aircraft engine assemblies.

### BACKGROUND

Aircraft engines may be replaced during the lifetime of an aircraft, and aircraft engines themselves are routinely removed from aircraft for maintenance to extend their operating life. Accordingly, aircraft engines are regularly transported to and from aircraft, manufacturing facilities, maintenance facilities, storage depots, and the like. Aircraft engines often have complex mounting assemblies that require stabilization during transport to avoid inadvertent wear-and-tear on component parts of the aircraft engines. Accordingly, there is a need to facilitate such stabilization of mounting assemblies during transport.

### BRIEF SUMMARY

There is provided a spacer tool for an aircraft engine assembly comprising a plurality of engine-assembly structures, the spacer tool comprising a body comprising at least three engine-assembly-structure engagement surfaces positioned to respectively engage three or more engine-assembly structures of the plurality of engine-assembly structures, wherein the body is configured to operatively maintain the at least three engine-assembly structures in a predetermined fixed relationship; wherein at least two of the at least three engine-assembly-structure engagement surfaces are planar and parallel to each other; wherein at least one of the at least three engine-assembly-structure engagement surfaces is partially cylindrical; wherein the body further comprises two indexing structures configured to respectively engage two of the plurality of engine-assembly structures, wherein the two indexing structures extend from two of the at least three engine-assembly-structure engagement surfaces, wherein at least one of the two indexing structures comprises an arm extending from one of the at least three engine-assembly-structure engagement surfaces and a tab extending from the arm, wherein the tab is spaced-apart from the one of the at least three engine-assembly-structure engagement surfaces, wherein the tab comprises a tab surface that is parallel to the one of the at least three engine-assembly-structure engagement surfaces; wherein the body defines a channel extending through the body; and wherein the body comprises a non-engagement surface positioned to not engage an engine-assembly structure of the plurality of engine-assembly structures, wherein the channel extends from one of the at least three engine-assembly-structure engagement surfaces to the non-engagement surface.

Further, there is provided a spacer tool for an aircraft engine assembly comprising a plurality of engine-assembly structures, the spacer tool comprising a body comprising two or more engine-assembly-structure engagement surfaces positioned to respectively engage two or more engine-assembly structures of the plurality of engine-assembly structures, wherein the body is configured to operatively maintain the two or more engine-assembly structures in a predetermined spaced-apart relationship, wherein the body is configured to operatively maintain the two or more engine-assembly structures in a predetermined fixed relationship.

Further, associated methods and aircraft engine assemblies are provided.

### BRIEF DESCRIPTION OF THE DRAWINGS

Fig. 1 is a diagram schematically representing spacer tools and aircraft engine assemblies according to the present disclosure.
Fig. 2 is a first isometric view of an example spacer tool according to the present disclosure.
Fig. 3 is a top view of the spacer tool of Fig. 2.
Fig. 4 is a second isometric view of the spacer tool of Fig. 2.
Fig. 5 is a first side view of the spacer tool of Fig. 2.
Fig. 6 is a second side view of the spacer tool of Fig. 2.
Fig. 7 is a third side view of the spacer tool of Fig. 2.
Fig. 8 is a fourth side view of the spacer tool of Fig. 2.
Fig. 9 is a third isometric view of the spacer tool of Fig. 2.
Fig. 10 is a bottom view of the spacer tool of Fig. 2.
Fig. 11 is a fourth isometric view of the spacer tool of Fig. 2.
Fig. 12 is a first view of an aircraft engine assembly including the spacer tool of Fig. 2 operatively installed.
Fig. 13 is a second view of the aircraft engine assembly of Fig. 12.
Fig. 14 is a third view of the aircraft engine assembly of Fig. 12.
Fig. 15 is a fourth view of the aircraft engine assembly of Fig. 12.
Fig. 16 is a flowchart schematically representing methods of manufacturing spacer tools according to the present disclosure.
Fig. 17 is a flowchart schematically representing methods of installing spacer tools according to the present disclosure.

### DESCRIPTION

Spacer tools 100 for aircraft engine assemblies 10, aircraft engine assemblies 10 with spacer tools 100, and related methods are disclosed herein. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

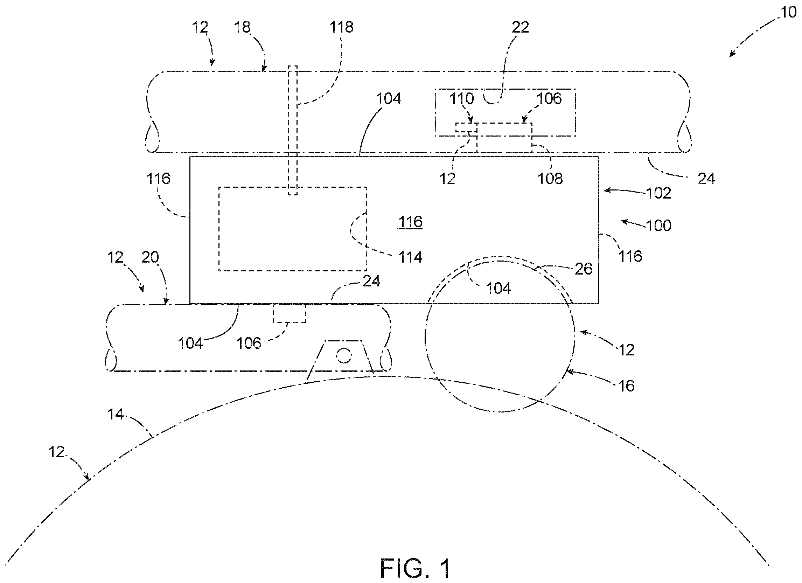

With reference to Fig. 1, aircraft engine assemblies 10 comprise a plurality of engine-assembly structures 12, including an engine 14 and various other engine-assembly structures 12. Examples of various engine-assembly structures 12 include (but are not limited to) ducts 16, mount beams 18, and mount linkages 20.

As schematically represent in Fig. 1 in solid lines, spacer tools 100 for aircraft engine assemblies 10 comprise at least a body 102 that comprises two or more engine-assembly-structure engagement surfaces 104 that are positioned to respectively engage two or more engine-assembly structures 12. The body 102 is configured to operatively maintain the two or more engine-assembly structures 12 in a predetermined spaced-apart relationship. Accordingly, spacer tools 100 are used to prevent undesirable movement of the various engine-assembly structures 12 relative to each other during transport and storage, for example. In some examples, the body 102 is configured to operatively maintain the two or more engine-assembly structures 12 in a predetermined fixed relationship, such that they are immobilized, or at least substantially immobilized, relative to each other.

In some examples of spacer tools 100, at least one engine-assembly-structure engagement surface 104 is planar. For example, although not required, a planar engine-assembly-structure engagement surface 104 may operatively engage a corresponding planar spacer-tool engagement surface 24 of an aircraft-assembly structure 12 when the spacer tool 100 is operatively installed in an aircraft engine assembly 10. In particular, operative contact between two planar surfaces may provide a desired amount of friction to facilitate the desired positioning of the corresponding engine-assembly structure 12. In some examples, at least two engine-assembly-structure engagement surfaces 104 are planar, and in some such examples, the two planar engine-assembly-structure engagement surfaces 104 are parallel to each other, such as schematically represented in Fig. 1. With such a configuration, the two engine-assembly-structure engagement surfaces 104 are positioned to engage corresponding planar spacer-tool engagement surfaces 24 of two engine-assembly structures 12 and operatively maintain them in a parallel relationship.

As also schematically and optionally represented in Fig. 1, in some examples, at least one engine-assembly-structure engagement surface 104 is non-planar. Accordingly, when present, the non-planar engine-assembly-structure engagement surface 104 is configured to engage a corresponding non-planar spacer-tool engagement surface 26 of a respective engine-assembly structure 12. In some examples, such a non-planar engine-assembly-structure engagement surface 104 is concave and corresponds to a convex surface of a respective engine-assembly structure 12. In some examples, the non-planar engine-assembly-structure engagement surface 104 is partially cylindrical, as schematically represented in Fig. 1, and thus is configured to engage a cylindrical engine-assembly structure 12, such as a duct 16.

Some examples of spacer tools 100 comprise at least three engine-assembly-structure engagement surfaces 104, such as including (but not limited to) two spaced-apart and parallel planar engine-assembly-structure engagement surfaces 104 and one non-planar engine-assembly-structure engagement surface 104, as generally schematically represented in Fig. 1.

With continued reference to Fig. 1, in some examples of spacer tools 100, the body 102 comprises one or more indexing structures 106 that are configured to respectively engage one or more of the plurality of engine-assembly structures 12. In some such examples, and as schematically and optionally represented in Fig. 1, an indexing structure 106 extends from a respective engine-assembly-structure engagement surfaces 104. Accordingly, when present, an indexing structure 106 is not provided to engage the spacer-tool engagement surfaces 24 of an engine-assembly structure 12 corresponding to the engine-assembly-structure engagement surfaces 104 from which the indexing structure 106 extends, but rather the indexing structure 106 is configured to engage a distinct portion of the corresponding engine-assembly structure 12 to operatively position the spacer tool 100 in a desired relationship to the engine-assembly structure 12. Examples of such features of an engine-assembly structure 12 with which an indexing structure 106 may be configured to engage include (but are not limited to) lips, ledges, pockets, and holes.

In some examples, a spacer tool 100 comprises two indexing structures 106 that are spaced-apart from each other and that extend from two distinct engine-assembly-structure engagement surfaces 104 of the body 102. Accordingly, the two indexing structures 106 are provided to index (i.e., to operatively position) the spacer tool 100 relative to two distinct engine-assembly structures 12. In some such examples, such as schematically and optionally represented in Fig. 1, the engine-assembly-structure engagement surfaces 104 from which the two indexing structures 106 extend are parallel to each other.

As schematically and optionally represented in Fig. 1, in some examples, at least one indexing structure 106 comprises an arm 108 that extends from an engine-assembly-structure engagement surfaces 104 and a tab 110 that extends from the arm 108, such that the tab 110 is spaced-apart from the engine-assembly-structure engagement surfaces 104 from which the 108 arm extends. Accordingly, such an indexing structure 106, and in particular the tab 110 thereof, may operatively engage such features as a lip, a ledge, a pocket, or a hole of an engine-assembly structure 12. In some such examples, although not required, the tab 110 comprises a tab surface 112 that is parallel to the engine-assembly-structure engagement surfaces 104 from which the arm 108 extends. Other configurations of indexing structures 106 may be utilized, including for example, indexing structures 106 that are cylindrical, pyramidal, rectangular prismatic, hooked, and so forth.

With continued reference to Fig. 1, in some examples of spacer tools 100, the body 102 defines a channel 114 that extends through the body 102. When present, the channel 114 may be utilized to receive a strap 118 for extending around an engine-assembly structure 12 to secure the spacer tool 100 to the engine-assembly structure 12. That is, a spacer tool 100 may comprise a strap 118. In some such examples, the channel 114 extends from a non-engagement surface 116 of the body 102. That is, in such examples, the body comprises a non-engagement surface 116 that is positioned to not engage an engine-assembly structure 12, such as schematically represented in Fig. 1. In some such examples, the channel 114 extends between two non-engagement surfaces 116 of the body 102. In other examples, the channel 114 extends between a non-engagement surface 116 and an engine-assembly-structure engagement surface 104. In yet other examples, the channel 114 extends between two engine-assembly-structure engagement surfaces 104. In examples where the channel 114 extends from an engine-assembly-structure engagement surface 104, such an engine-assembly-structure engagement surface 104 is configured to span beyond a corresponding engine-assembly structure 12 with which it engages when the spacer tool 100 is operatively installed. As a result, such an engine-assembly-structure engagement surfaces 104 provides a large platform to ensure operative engagement with the corresponding engine-assembly structure 12.

In some examples, such as schematically represented in Fig. 1, a non-engagement surface 116 through which a channel 114 extends is non-parallel (e.g., perpendicular) to an engine-assembly-structure engagement surfaces 104 through which the channel 114 extends.

In some examples, the body 102 comprises more than one channel 114 extending between two or more surfaces of the body 102, such as to provide multiple paths for corresponding straps 118 and operative securement of one or more engine-assembly structures 12.

In some examples, the body 102 may be least partially hollow, such as to reduce the weight and volume of material required to construct the body 102.

In some examples, the body 102 is monolithic in construction. For example, the body 102 may be an additively manufactured body.

In some examples, the body 102 is constructed of acrylonitrile butadiene styrene (ABS).

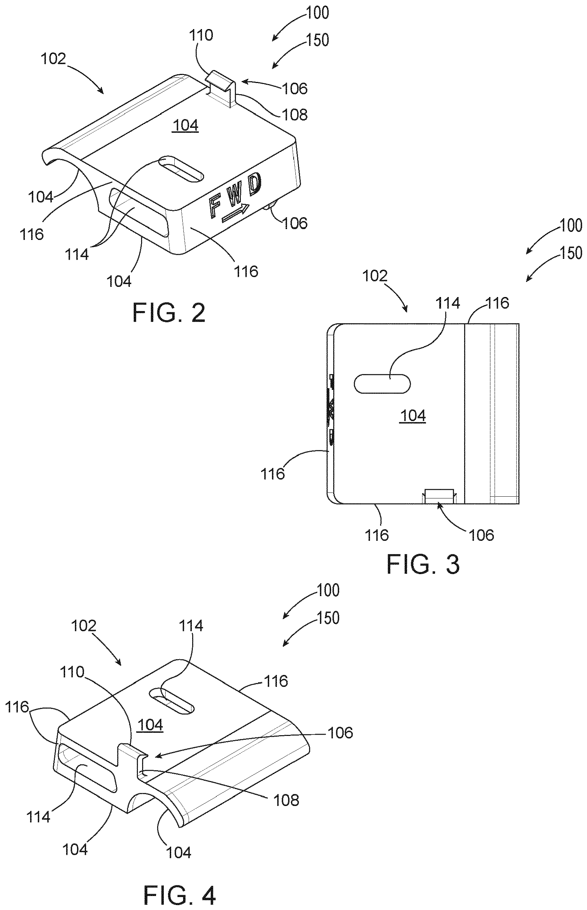

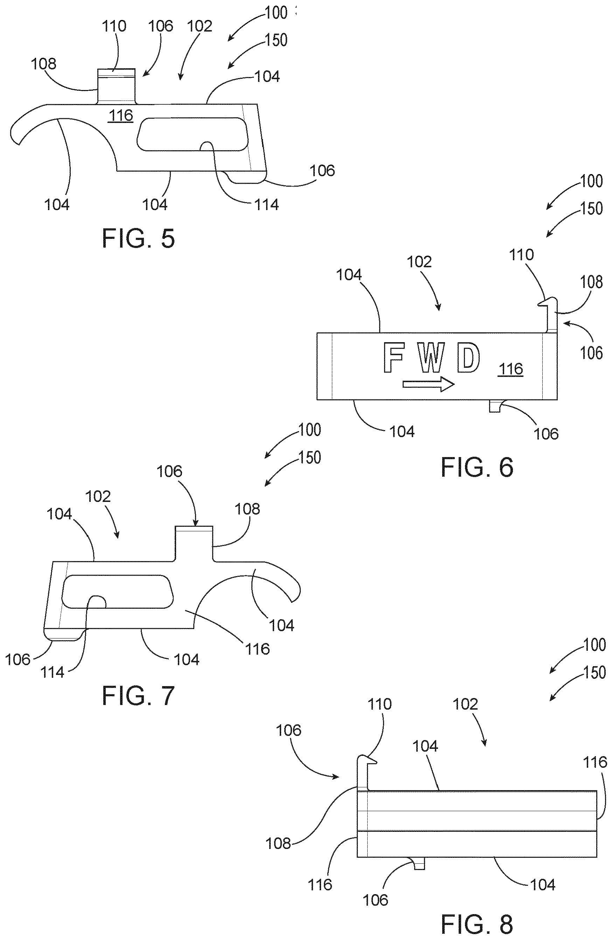

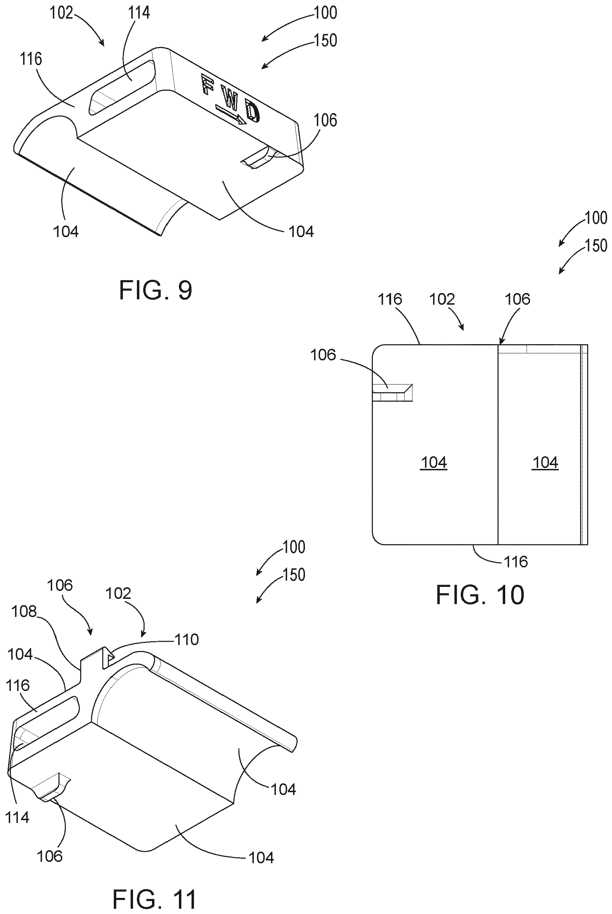

Turning now to Figs. 2-11, an illustrative non-exclusive example of a spacer tool 100 in the form of spacer tool 150 is illustrated. Where appropriate, the reference numerals from the schematic illustration of Fig. 1 are used to designate corresponding parts of spacer tool 150; however, the example of Figs. 2-11 is non-exclusive and does not limit spacer tools 100 to the illustrated embodiment of Figs. 2-11. That is, spacer tools 100 are not limited to the specific embodiment of the illustrated spacer tool 150, and spacer tools 100 may incorporate any number of the various aspects, configurations, characteristics, properties, etc. of spacer tools 100 that are illustrated in and discussed with reference to the schematic representation of Fig. 1 and/or the embodiment of Figs. 2-11, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to spacer tool 150; however, it is within the scope of the present disclosure that the previously discussed features, variants, etc. may be utilized with spacer tool 150 or a variation thereof.

With reference to Figs. 2-11, spacer tool 150 is an example of a spacer tool 100 whose body 102 is monolithic and additively manufactured from ABS. The body 102 of spacer tool 150 comprises two parallel and planar engine-assembly-structure engagement surfaces 104 and a partially cylindrical engine-assembly-structure engagement surface 104. The body 102 may be described as at least partially hollow and defines a channel 114 that extends from one of the planar engine-assembly-structure engagement surfaces 104 to two opposing non-engagement surfaces 116. That is, the channel 114 of spacer tool 150 may be described as having three openings in the body 102 of the spacer tool 150.

Spacer tool 150 is an example of a spacer tool 100 whose body 102 comprises two spaced-apart indexing structures 106. In particular, one of the indexing structures 106 extends from the engine-assembly-structure engage surface 104 through which the channel 114 extends and comprises an arm 108 and a tab 110. The other of the two indexing structures 106 extends from the opposite engine-assembly-structure engage surface 104 and may be described as having a truncated rectangular pyramid shape.

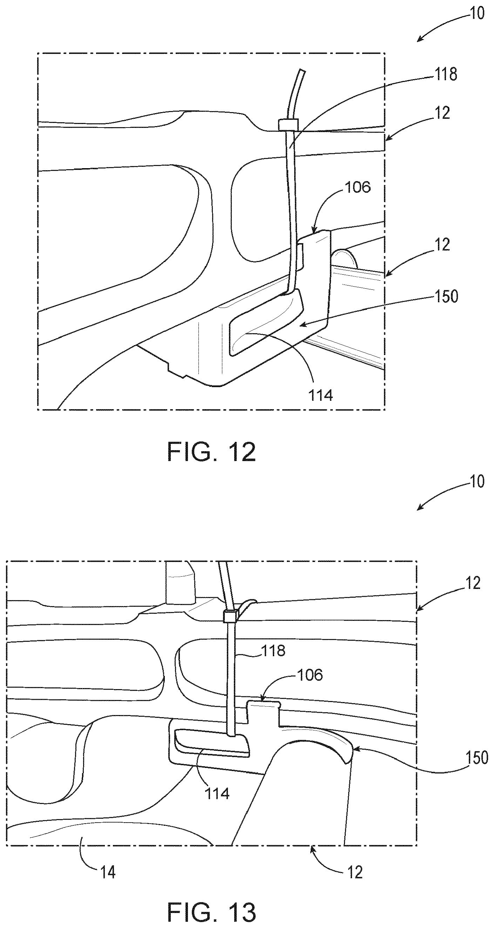

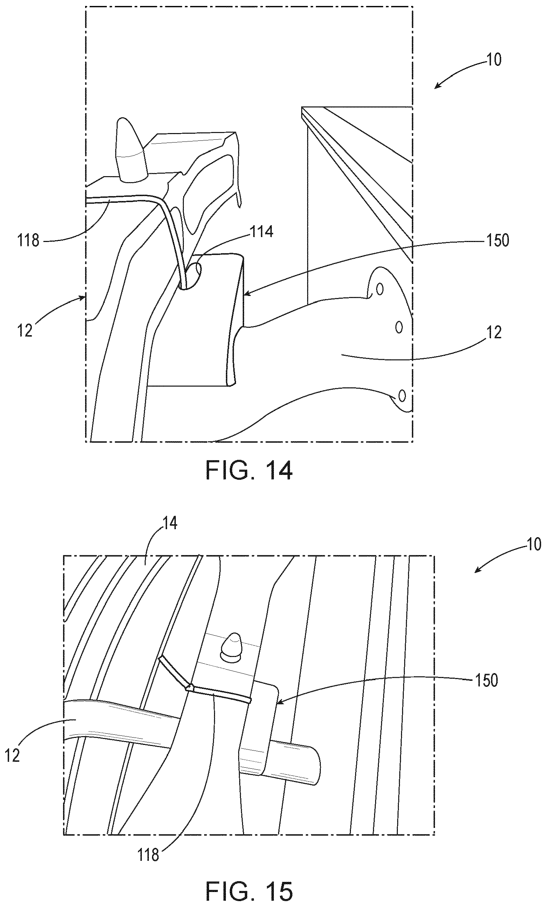

Turning to Figs. 12-15, spacer tool 150 is illustrated as part of an aircraft engine assembly 10 and as comprising a strap 118 in the form of a zip-tie, or cable tie.

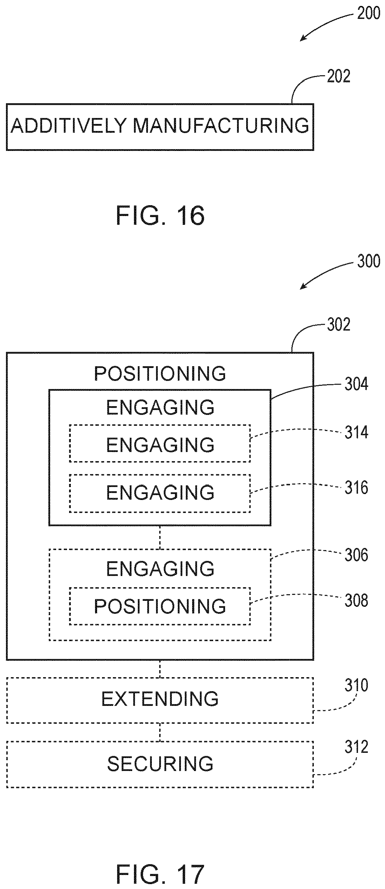

Figs. 16 and 17 schematically provide flowcharts that represent illustrative, non-exclusive examples of methods according to the present disclosure. In Fig. 17, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Figs. 16 and 17 are not limiting and other methods and steps are within the scope of the present disclosure, including methods having greater than or fewer than the number of steps illustrated, as understood from the discussions herein.

As schematically represented in Fig. 16, a method 200 of manufacturing a spacer tool 100 according to the present disclosure comprises additively manufacturing 202 the body 102 of the spacer tool 100. In some methods, the body 102 is additively manufactured from ABS, although other materials also may be used.

As schematically represented in Fig. 17, a method 300 of installing a spacer tool 100 according to the present disclosure to secure an aircraft engine assembly 10 for transport comprises at least positioning 302 the body 102 of the spacer tool 100, in which the positioning 302 comprises engaging 304 two or more engine-assembly-structure engagement surfaces 104 of the body 102 with two or more engine-assembly structures 12.

In some methods 300, the positioning 302 further comprises engaging 306 one or more indexing structures 106 of the body 102 of the spacer tool 150 with one or more respective engine-assembly structures 12. In some such methods, the engaging 306 the one or more indexing structures 106 comprises positioning 308 a tab 110 of an indexing structure 106 within a cavity 22 of a respective engine-assembly structures 12.

Some methods 300 further comprise extending 310 a strap 118 through a channel 114 of the body 102 of the spacer tool 100 and, following the positioning 302, securing 312 the strap 118 to an engine-assembly structure 12.

In some methods 300, at least one of the engine-assembly structures 12 comprises a planar spacer-tool engagement surface 24, and the engaging 304 comprises engaging 314 at least one engine-assembly-structure engagement surface 104 that is planar with the planar spacer-tool engagement surface 24.

In some methods 300, at least one of the engine-assembly structures 12 comprises a non-planar spacer-tool engagement surface 26, and the engaging 304 comprises engaging 316 at least one engine-assembly-structure engagement surface 104 that is non-planar with the non-planar spacer-tool engagement surface 26.

Illustrative, non-exclusive examples of inventive subject matter according to the present disclosure are described in the following enumerated paragraphs:
A. A spacer tool (100) for an aircraft engine assembly (10) comprising a plurality of engine-assembly structures (12), the spacer tool (100) comprising:
   a body (102) comprising two or more engine-assembly-structure engagement surfaces (104) positioned to respectively engage two or more engine-assembly structures (12) of the plurality of engine-assembly structures (12), wherein the body (102) is configured to operatively maintain the two or more engine-assembly structures (12) in a predetermined spaced-apart relationship.
A1. The spacer tool (100) of paragraph A, wherein the body (102) is configured to operatively maintain the two or more engine-assembly structures (12) in a predetermined fixed relationship.
A2. The spacer tool (100) of any of paragraphs A-A1, wherein at least one of the two or more engine-assembly-structure engagement surfaces (104) is planar.
A3. The spacer tool (100) of any of paragraphs A-A2, wherein at least two of the two or more engine-assembly-structure engagement surfaces (104) are planar.
A4. The spacer tool (100) of any of paragraphs A-A3, wherein at least two of the two or more engine-assembly-structure engagement surfaces (104) are parallel to each other.
A5. The spacer tool (100) of any of paragraphs A-A4, wherein at least two of the two or more engine-assembly-structure engagement surfaces (104) are planar and parallel to each other.
A6. The spacer tool (100) of any of paragraphs A-A5, wherein at least one of the two or more engine-assembly-structure engagement surfaces (104) is non-planar.
A7. The spacer tool (100) of any of paragraphs A-A6, wherein at least one of the two or more engine-assembly-structure engagement surfaces (104) is concave.
A8. The spacer tool (100) of any of paragraphs A-A7, wherein at least one of the two or more engine-assembly-structure engagement surfaces (104) is partially cylindrical.
A9. The spacer tool (100) of any of paragraphs A-A8, wherein the two or more engine-assembly-structure engagement surfaces (104) comprises at least three engine-assembly-structure engagement surfaces (104).
A10. The spacer tool (100) of any of paragraphs A-A9, wherein the body (102) comprises one or more indexing structures (106) configured to respectively engage one or more of the plurality of engine-assembly structures (12).
A10.1. The spacer tool (100) of paragraph A10, wherein the one or more indexing structures (106) extend from a respective one or more of the two or more engine-assembly-structure engagement surfaces (104).
A10.2. The spacer tool (100) of any of paragraphs A10-A10.1, wherein the one or more indexing structures (106) comprise two indexing structures (106), and wherein the two indexing structures extend from two of the two or more engine-assembly-structure engagement surfaces (104).
A10.2.1. The spacer tool (100) of paragraph A10.2, wherein the two of the two or more engine-assembly-structure engagement surfaces (104) are parallel to each other.
A10.3. The spacer tool (100) of any of paragraphs A10-A10.2.1, wherein at least one of the one or more indexing structures (106) comprises an arm (108) extending from one of the two or more engine-assembly-structure engagement surfaces (104) and a tab (110) extending from the arm (108), wherein the tab (110) is spaced-apart from the one of the two or more engine-assembly-structure engagement surfaces (104).
A10.3.1. The spacer tool (100) of paragraph A10.3, wherein the tab (110) comprises a tab surface (112) that is parallel to the one of the two or more engine-assembly-structure engagement surfaces (104).
A11. The spacer tool (100) of any of paragraphs A-A10.3.1, wherein the body (102) defines a channel (114) extending through the body (102).
A11.1. The spacer tool (100) of paragraph A11, wherein the body (102) comprises a non-engagement surface (116) positioned to not engage an engine-assembly structure (12) of the plurality of engine-assembly structures (12), and wherein the channel (114) extends from one of the two or more engine-assembly-structure engagement surfaces (104) to the non-engagement surface (116).
A11.1.1. The spacer tool (100) of paragraph A11.1, wherein the non-engagement surface (116) is non-parallel to the one of the two or more engine-assembly-structure engagement surfaces (104) through which the channel (114) extends.
A11.1.2. The spacer tool (100) of paragraph A11.1, wherein the non-engagement surface (116) is perpendicular to the one of the two or more engine-assembly-structure engagement surfaces (104) through which the channel (114) extends.
A11.2. The spacer tool (100) of any of paragraphs A11-A11.1.2, further comprising a strap (118) configured to be selectively extended through the channel (114) and secured to an engine-assembly structure (12) of the plurality of engine-assembly structures (12).
A12. The spacer tool (100) of any of paragraphs A-A11.2, wherein the body (102) is at least partially hollow.
A13. The spacer tool (100) of any of paragraphs A-A12, wherein the body (102) is monolithic in construction.
A14. The spacer tool (100) of any of paragraphs A-A13, wherein the body (102) is an additively manufactured body.
A15. The spacer tool (100) of any of paragraphs A-A14, wherein the body (102) is constructed of acrylonitrile butadiene styrene (ABS).
B. An aircraft engine assembly (10), comprising:
   an aircraft engine (14);
   a plurality of engine-assembly structures (12) operatively coupled to the aircraft engine (14); and
   the spacer tool (100) of any of paragraphs A-A15 operatively engaged with the plurality of engine-assembly structures (12).
C. A method (200) of manufacturing the spacer tool (100) of any of paragraphs A-A15, comprising additively manufacturing (202) the body (102).
D. A method (300) of installing the spacer tool (100) of any of paragraphs A-A15 to secure an aircraft engine assembly (10) for transport, the method (300) comprising:
   positioning (302) the body (102), wherein the positioning (302) comprises engaging (304) the two or more engine-assembly-structure engagement surfaces (104) with the two or more engine-assembly structures (12) of the plurality of engine-assembly structures (12).
D1. The method (300) of paragraph D when depending from paragraph A10, wherein the positioning (302) further comprises engaging (306) the one or more indexing structures (106) with respective ones of the one or more of the plurality of engine-assembly structures (12).
D1.1. The method (300) of paragraph D1 when depending from paragraph A10.3, wherein the engaging (306) the one or more indexing structures (106) comprises positioning (308) the tab (110) within a cavity (22) of a respective one plurality of engine-assembly structures (12).
D2. The method (300) of any of paragraphs D-D1.1 when depending from paragraph A11, further comprising:
   extending (310) a/the strap (118) through the channel (114); and
   following the positioning (302), securing (312) the strap (118) to an engine-assembly structure (12) of the plurality of engine-assembly structures (12).
D3. The method (300) of any of paragraphs D-D2 when depending from paragraph A2, wherein at least one of the engine-assembly structures (12) of the plurality of engine-assembly structures (12) comprises a planar spacer-tool engagement surface (24), and wherein the engaging (304) the two or more engine-assembly-structure engagement surfaces (104) with the two or more engine-assembly structures (12) of the plurality of engine-assembly structures (12) comprises engaging (314) the at least one of the two or more engine-assembly structure engagement surfaces (104) that is planar with the planar spacer-tool engagement surface (24).
D4. The method of (300) of any of paragraphs D-D3 when depending from paragraph A6, wherein at least one of the engine-assembly structures (12) of the plurality of engine-assembly structures (12) comprises a non-planar spacer-tool engagement surface (26), and wherein the engaging (304) the two or more engine-assembly-structure engagement surfaces (104) with the two or more engine-assembly structures (12) of the plurality of engine-assembly structures (12) comprises engaging (316) the at least one of the two or more engine-assembly structure engagement surfaces (104) that is non-planar with the non-planar spacer-tool engagement surface (26).

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A spacer tool (100) for an aircraft engine assembly (10) comprising a plurality of engine-assembly structures (12), the spacer tool (100) comprising:
a body (102) comprising at least three engine-assembly-structure engagement surfaces (104) positioned to respectively engage three or more engine-assembly structures (12) of the plurality of engine-assembly structures (12), wherein the body (102) is configured to operatively maintain the at least three engine-assembly structures (12) in a predetermined fixed relationship;
wherein at least two of the at least three engine-assembly-structure engagement surfaces (104) are planar and parallel to each other;
wherein at least one of the at least three engine-assembly-structure engagement surfaces (104) is partially cylindrical;
wherein the body (102) further comprises two indexing structures (106) configured to respectively engage two of the plurality of engine-assembly structures (12), wherein the two indexing structures extend from two of the at least three engine-assembly-structure engagement surfaces (104), wherein at least one of the two indexing structures (106) comprises an arm (108) extending from one of the at least three engine-assembly-structure engagement surfaces (104) and a tab (110) extending from the arm (108), wherein the tab (110) is spaced-apart from the one of the at least three engine-assembly-structure engagement surfaces (104), wherein the tab (110) comprises a tab surface (112) that is parallel to the one of the at least three engine-assembly-structure engagement surfaces (104);
wherein the body (102) defines a channel (114) extending through the body (102); and
wherein the body (102) comprises a non-engagement surface (116) positioned to not engage an engine-assembly structure (12) of the plurality of engine-assembly structures (12), wherein the channel (114) extends from one of the at least three engine-assembly-structure engagement surfaces (104) to the non-engagement surface (116).

2. An aircraft engine assembly (10), comprising:
the spacer tool (100) of claim 1;
an aircraft engine (14); and
the plurality of engine-assembly structures (12) operatively coupled to the aircraft engine (14), wherein the spacer tool (100) is operatively engaged with the plurality of engine-assembly structures (12).

3. A method (300) of installing the spacer tool (100) of claim 1 or 2 to secure an aircraft engine assembly (10) for transport, the method (300) comprising:
positioning (302) the body (102), wherein the positioning (302) comprises engaging (304) the at least three engine-assembly-structure engagement surfaces (104) with the three or more engine-assembly structures (12) of the plurality of engine-assembly structures (12).

4. The method (300) of claim 3, wherein the positioning (302) further comprises engaging (306) the two indexing structures (106) with respective ones of the two of the plurality of engine-assembly structures (12), wherein the engaging (306) the two indexing structures (106) optionally comprises positioning (308) the tab (110) within a cavity (22) of a respective one of the plurality of engine-assembly structures (12).

5. The method (300) of claim 3 or 4, further comprising:
extending (310) a strap (118) through the channel (114); and
following the positioning (302), securing (312) the strap (118) to an engine-assembly structure (12) of the plurality of engine-assembly structures (12).

6. The method (300) of any of claims 3 to 5, wherein at least one of the engine-assembly structures (12) of the plurality of engine-assembly structures (12) comprises a planar spacer-tool engagement surface (24), and wherein the engaging (304) the at least three engine-assembly-structure engagement surfaces (104) with the three or more engine-assembly structures (12) of the plurality of engine-assembly structures (12) comprises engaging (314) at least one of the at least three engine-assembly structure engagement surfaces (104) that is planar with the planar spacer-tool engagement surface (24), and/or
wherein at least one of the engine-assembly structures (12) of the plurality of engine-assembly structures (12) comprises a non-planar spacer-tool engagement surface (26), and wherein the engaging (304) the at least three engine-assembly-structure engagement surfaces (104) with the three or more engine-assembly structures (12) of the plurality of engine-assembly structures (12) comprises engaging (316) at least one of the at least three engine-assembly structure engagement surfaces (104) that is non-planar with the non-planar spacer-tool engagement surface (26).

7. A spacer tool (100) for an aircraft engine assembly (10) comprising a plurality of engine-assembly structures (12), the spacer tool (100) comprising:
a body (102) comprising two or more engine-assembly-structure engagement surfaces (104) positioned to respectively engage two or more engine-assembly structures (12) of the plurality of engine-assembly structures (12), wherein the body (102) is configured to operatively maintain the two or more engine-assembly structures (12) in a predetermined spaced-apart relationship, wherein the body (102) is configured to operatively maintain the two or more engine-assembly structures (12) in a predetermined fixed relationship.

8. The spacer tool (100) of claim 7, wherein at least two of the two or more engine-assembly-structure engagement surfaces (104) are planar and parallel to each other, and/or wherein the two or more engine-assembly-structure engagement surfaces (104) comprises at least three engine-assembly-structure engagement surfaces (104).

9. The spacer tool (100) of claim 7 or 8, wherein at least one of the two or more engine-assembly-structure engagement surfaces (104) is partially cylindrical.

10. The spacer tool (100) of any of claims 7 to 9, wherein the body (102) comprises one or more indexing structures (106) configured to respectively engage one or more of the plurality of engine-assembly structures (12), wherein the one or more indexing structures (106) optionally extend from a respective one or more of the two or more engine-assembly-structure engagement surfaces (104).

11. The spacer tool (100) of claim 10, wherein the one or more indexing structures (106) comprise two indexing structures (106), and wherein the two indexing structures extend from two of the two or more engine-assembly-structure engagement surfaces (104), wherein the two of the two or more engine-assembly-structure engagement surfaces (104) are optionally parallel to each other.

12. The spacer tool (100) of any of claims 7 to 11, wherein the body (102) defines a channel (114) extending through the body (102), the spacer tool optionally further comprising a strap (118) configured to be selectively extended through the channel (114) and secured to an engine-assembly structure (12) of the plurality of engine-assembly structures (12).

13. An aircraft engine assembly (10), comprising:
the spacer tool (100) of claim 10;
an aircraft engine (14); and
the plurality of engine-assembly structures (12) operatively coupled to the aircraft engine (14);
wherein the spacer tool (100) is operatively engaged with the plurality of engine-assembly structures (12).

14. A method (200) of manufacturing the spacer tool (100) of any of claims 7 to 12, comprising additively manufacturing (202) the body (102).

15. A method (300) of installing the spacer tool (100) of any of claims 7 to 12 to secure an aircraft engine assembly (10) for transport, the method (300) comprising:
positioning (302) the body (102), wherein the positioning (302) comprises engaging (304) the two or more engine-assembly-structure engagement surfaces (104) with the two or more engine-assembly structures (12) of the plurality of engine-assembly structures (12).
